(19) Europäisches Patentamt
European Patent Office
Office européen des brevets

(11) EP 2 325 487 A1

(12) EUROPEAN PATENT APPLICATION

(43) Date of publication:
25.05.2011 Bulletin 2011/21

(51) Int Cl.:
$F03G\ 3/06^{(2006.01)}$

(21) Application number: 09176316.9

(22) Date of filing: 18.11.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: Lysyuk, Dmitryi
Kiev (UA)

(72) Inventor: Lysyuk, Dmitryi
Kiev (UA)

(74) Representative: Gulde Hengelhaupt Ziebig &
Schneider
Patentanwälte - Rechtsanwälte
Wallstrasse 58/59
10179 Berlin (DE)

(54) **Actuator and method of producing a residual force in a system of rotating objects**

(57) It is an object of the invention to provide an actuator or means for moving an object in three-dimensional space. An inventive actuator comprises a first object ($6_1$) rotating clockwise with a first rotational frequency ($f_1$) around a first axis (X1); a second object ($6_2$) rotating anticlockwise with a second rotational frequency ($f_2$) around a second axis (X2); a third object ($6_3$) rotating clockwise with a third rotational frequency ($f_3$) around a third axis (X3); and a fourth object ($6_4$) rotating anticlockwise with a fourth rotational frequency ($f_4$) around a fourth axis (X4). The plane of rotation of the first object ($6_1$) itself rotates around a fifth axis (Y1) with a fifth rotational frequency ($f_5$), the plane of rotation of the second object ($6_2$) itself rotates around a sixth axis (Y2) with a sixth rotational frequency ($f_6$), the plane of rotation of the third object ($6_3$) itself rotates around a seventh axis (Y3) with a seventh rotational frequency ($f_7$), the plane of rotation of the fourth object ($6_4$) itself rotates around an eight axis (Y4) with a eight rotational frequency ($f_8$).

Fig. 3

## Description

The current invention is directed to an actuator and a method of producing a residual force in a system of rotating objects. More specifically, it is directed to a means for moving objects in three-dimensional space.

An actuator typically is a mechanical device that consumes energy, usually created by air, electricity, or liquid, and converts that into some kind of motion. In engineering actuators are frequently used as mechanisms to introduce motion. Specific examples include electrical motors, pneumatic actuators, hydraulic actuators and the like.

One special kind of actuator is a helicopter, an aircraft that is lifted by horizontal rotors, each rotor consisting of two or more rotor blades. Helicopters can take off without any linear motion. The lift of the rotor also allows the helicopter to hover above a fixed point. They can be used to move objects in three-dimensional space, i.e. to lift and carry weights or freight or cargo. On a helicopter, a rotor may be mounted horizontally as a main rotor, providing a vertical lift, or it may be mounted vertically, such as a tail rotor, to provide a horizontal lift as thrust to counteract a torque effect. The rotating blades of the rotor generate a dynamic uplift by a flow of air.

Further known are mechanical vibrators, where the vibration is generated by an electric motor with an unbalanced mass on its driveshaft. Vibrators are used in many different industrial applications, e.g. in mobile telephones of for compacting different materials. The vibrations may be generated by rotating unbalanced masses, which may generate a sinusoidal resulting force or vibration.

## Summary of the Invention

It is an object of the invention to provide an actuator or means for moving an object in three-dimensional space as well as a method of moving an in three-dimensional space by producing a residual force in a system of rotating objects.

Accordingly, an actuator is provided, comprising a first object rotating clockwise with a first rotational frequency around a first axis, a second object rotating anticlockwise with a second rotational frequency around a second axis, a third object rotating clockwise with a third rotational frequency around a third axis; and a fourth object rotating anticlockwise with a fourth rotational frequency around a fourth axis. The planes of rotation of the different objects rotate as well. The plane of rotation of the first object itself rotates around a fifth axis with a fifth rotational frequency, the plane of rotation of the second object itself rotates around a sixth axis with a sixth rotational frequency, the plane of rotation of the third object itself rotates around a seventh axis with a seventh rotational frequency, the plane of rotation of the fourth object itself rotates around an eight axis with a eight rotational frequency.

Preferably, the planes of rotation of the first object and the second object may rotate clockwise and the planes of rotation of the third object and the fourth object rotate anti-clockwise. This has the desired effect that the resulting force of inertia of the rotating objects can be aligned with a principle axis, e.g. the z-axis and all components of the resulting force in different directions are zero.

The first object and the second object may rotate around their respective axis with the same frequency. The third object and the fourth object may additionally or alternatively rotate around their respective axis with the same frequency.

The planes of rotation of the first object and the second object may rotate with the same frequency. The planes of rotation of the third object and the fourth object may rotate with the same frequency.

The first axis and the second axis may be arranged parallel to one another. Additionally or alternatively, the third axis and the fourth axis may be arranged parallel to one another.

The phase of rotation the first object and the phase of rotation of the second object may be the same, and/or the phase of rotation the third object and the phase of rotation of the fourth object may be the same.

In order to optimize the alignment of the net forces of inertia of the objects and to produce a movement in space, the first to eight frequency of rotation may all have the same value, the first to fourth axis may be parallel to each other and the fifth to eight axis may be parallel to each other, and the first to fourth axis may be perpendicular to the fifth to eight axis.

The first object and the second object may be coupled to a first shaft, wherein the first shaft rotates around an axis such that the fifth rotational frequency and the sixth rotational frequency are equal and have the value of the rotational frequency of the first shaft and the fifth axis and the sixth axis are aligned with each other. Further, the third object and the fourth object may be coupled to a second shaft, wherein the second shaft rotates around an axis such that the seventh rotational frequency and the eight rotational frequency are equal and have the value of the rotational frequency of the second shaft, and the seventh axis and the eight axis are aligned with each other.

The first and second shaft may be arranged parallel to each other. Each of the objects may connect to their respective shafts via a rotor. The rotors of the first and second object, and/or the rotors of the third and fourth object may be provided longitudinally spaced apart on the first shaft or the second shaft, respectively, or may be arranged on two opposite sides of the first shaft or second shaft, respectively, fixed to the same point of the first shaft or second shaft, respectively. The rotors may be connected to the respective shafts via gear wheels or cogged wheels.

The first shaft may be attached to a first base and the second shaft may be attached to a second base or both shafts may be attached to the same base.

At least one motor may be provided to rotate the objects and planes of rotation.

The first to fourth object may be identical and/or their radii of rotations may be the same.

Further, a method of producing a residual force in a system of rotating objects, preferably in the actuator represented above, comprises the steps of rotating a first object clockwise with a first rotational frequency around a first axis, rotating a second object anticlockwise with a second rotational frequency around a second axis, rotating a third object clockwise with a third rotational frequency around a third axis, rotating a fourth object anticlockwise with a fourth rotational frequency around a fourth axis. Further, it comprises the steps of rotating the plane of rotation of the first object itself around a fifth axis with a fifth rotational frequency, rotating the plane of rotation of the second object itself around a sixth axis with a sixth rotational frequency, rotating the plane of rotation of the third object itself around a seventh axis with a seventh rotational frequency, rotating the plane of rotation of the fourth object itself around an eight axis with a eight rotational frequency, and producing a net residual force by adjusting at least one element of the group consisting of (a) the frequency of rotation of the objects; (b) the frequency of rotation of the planes of rotation of the objects; (c) the direction of the axis of rotations of the objects; (d) the direction of the axis of the planes of rotation of the objects; (e) the weight of the objects; (f) the phases of rotation of the objects; and (g) the radii of rotation of the objects.

The net residual force can be maximized if all frequencies of rotation are the same, and the first to fourth axis of rotation are parallel to each other and the fifth to eight axis are parallel to each other, and the objects are identical, and the phase differences between the first and third object is zero and the phase difference between the second and fourth object is zero and the locations of the zero-crossing points of motion are identical for all four objects, and the radii of rotation of the objects are identical.

## Brief description of the drawings

The invention will be described by exemplary embodiments of the invention with reference to the following figures, which show:

Fig. 1: a first object rotating around an axis X1;

Fig. 2a-2d: a first object rotating around a first axis X1, a second object rotating around a second axis X2, the planes of rotation of the first and second object rotating around an axis Y; the rotations are shown at 0°, 90°, 180° and 270°;

Fig. 3: a first embodiment of the invention of four coupled rotating objects, wherein the planes of rotation of the first and second object rotate around an axis Y1=Y2 and the planes of rotation of the third to fourth object rotate around an axis Y3=Y4, the couples Y1, Y2 and Y3, Y4 being parallel to each other;

Fig. 4a, 4b: a vector diagram of $F_{inertia}$ of the coupled objects of Fig. 2 (Fig. 4a) and a vertical projection of $F_{inertia}$ (Fig. 4b);

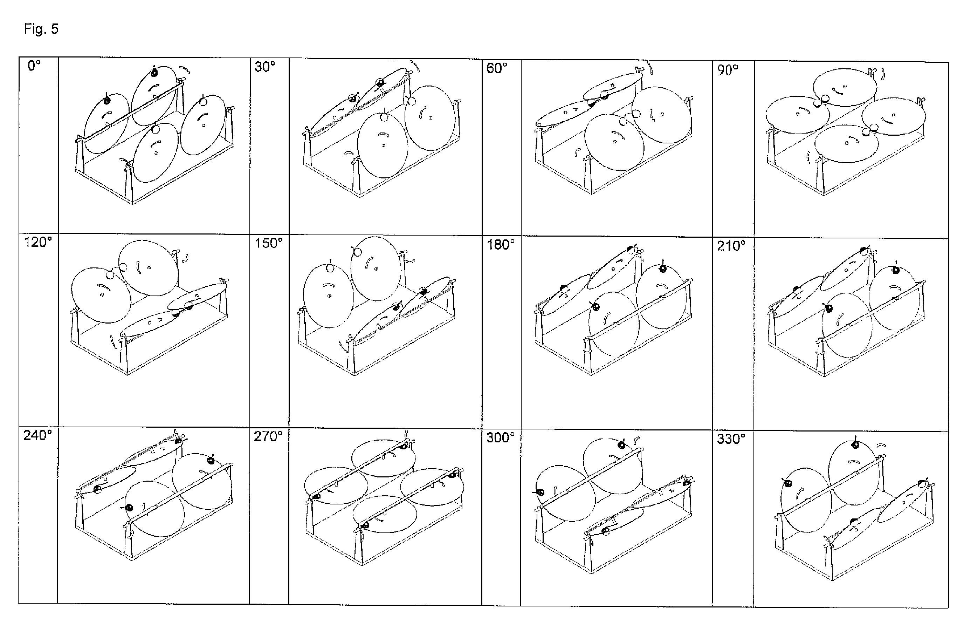

Fig. 5: the coupled system of Fig. 4 for different angles of rotation;

Fig. 6: a second embodiment of the invention showing only two coupled objects;

Fig. 7a, 7b: the second embodiment of the invention showing the inventive four coupled objects at two different angles of rotation.

## Detailed description of the drawings

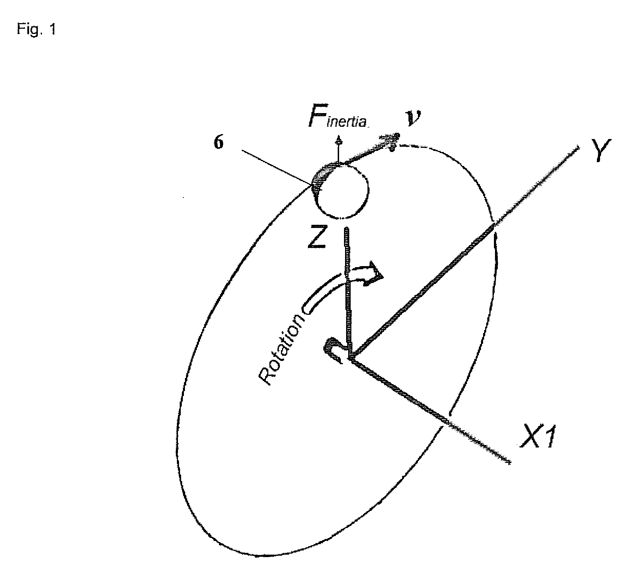

The present invention is directed to a means or method of moving objects in three dimensional space. The means may also be called actuator or cargo lifter without any limiting effect. The means produces a force which is based on the forces of inertia that appear in rotating bodies that rotate in a global coordinate system (coordinates X, Y, Z). The rotating bodies may be called objects or balances. Fig. 1 shows such a rotating object 6. The object rotates around the axis X1. When an object rotates around the local axis X1, having a radius of rotation perpendicular to the axis, a force of inertia appears, and this force of inertia is directed from the center of rotation along the line of the radius of rotation and is applied to the center of mass of the object at any given moment of time. The force can be calculated from the equation:

$$F_{inertia}=m \cdot v^2/r$$

$$(1),$$

where "$F_{inertia}$" is the force of inertia, measured in newtons (N), "m" is the mass of the object, measured in kilograms (kg); "v" is the speed of the object perpendicular to the radius, measured in meters per second (m/s) and "r" is the radius of rotation, measured in meters (m). This equation may be rewritten as:

$$F_{inertia} = 4 \cdot \pi^2 \cdot m \cdot r \cdot f^2$$

$$(2),$$

where f is the frequency of rotation of the object.

The size of the force of inertia is linearly proportionate to the mass of the object 6 and to the radius of rotation, and quadratic proportionate to the frequency $f_1$ of rotation. At such conditions, at a constant frequency of rotation and constant mass and radius of rotation, the force of inertia has a constant value and its vector is directed along the radius of rotation at every moment of rotation, in direction away from the center of rotation represented by the local axis X1 in Fig. 1. The complete fixed combination of rotating object, radius, axis X1 and the frequency is called in the following a "single system".

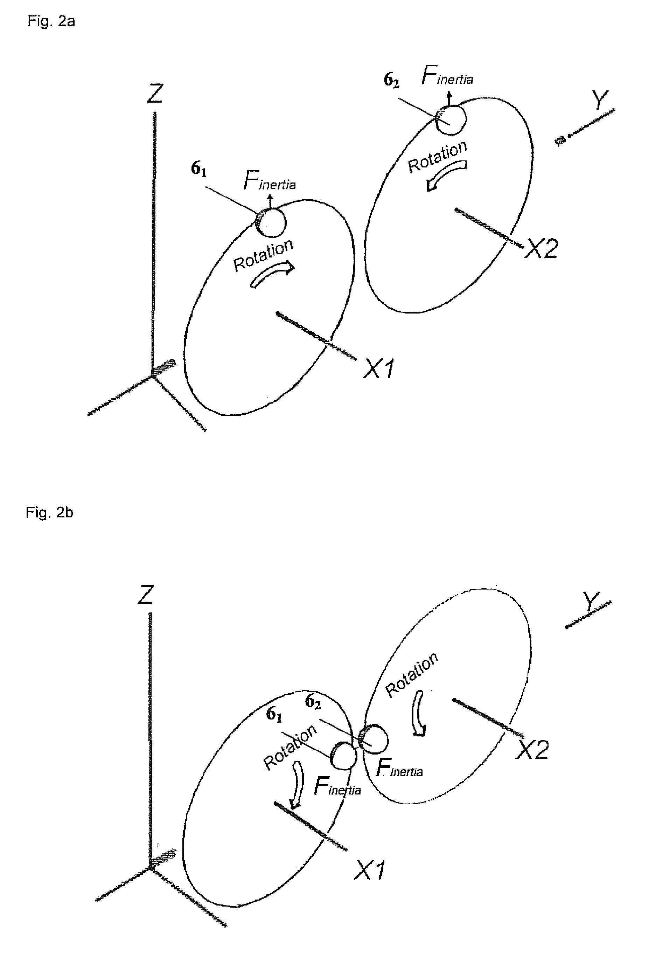

Fig. 2a-2d now show two such single systems or two rotating objects $6_1$ and $6_2$ for different angles of 0 degrees, 90 degrees, 180 degrees and 270 degrees. In Fig. 2a-d, the two single systems are allocated in the same plane, i.e. the YZ-plane, so that their axis X1 and X2 are perpendicular to that plane and parallel to one another. The axis Y which connects the centers of rotation of the two rotating objects $6_1$ and $6_2$ lies in the YZ-plane. Now, if these two single systems $6_1$ and $6_2$ rotate in different directions, i.e. the singular system with object $6_1$ rotates clockwise and the singular system with object $6_2$ rotates anticlockwise, and the frequency of rotation $f_1$ and $f_2$ are equal for both singular systems, and the phases of the objects $6_1$ and $6_2$ are the same for both systems, e.g. both objects $6_1$ and $6_2$ start their movement at the top as shown in Fig. 2a, an effect of combining the two forces of inertia of the two moving objects $6_1$ and $6_2$ is achieved. The direction of the sum vector of the forces of inertia will lie in the same plane, the YZ-plane and will always be perpendicular to the axis Y1 as can be seen in Figs. 2a-2d.

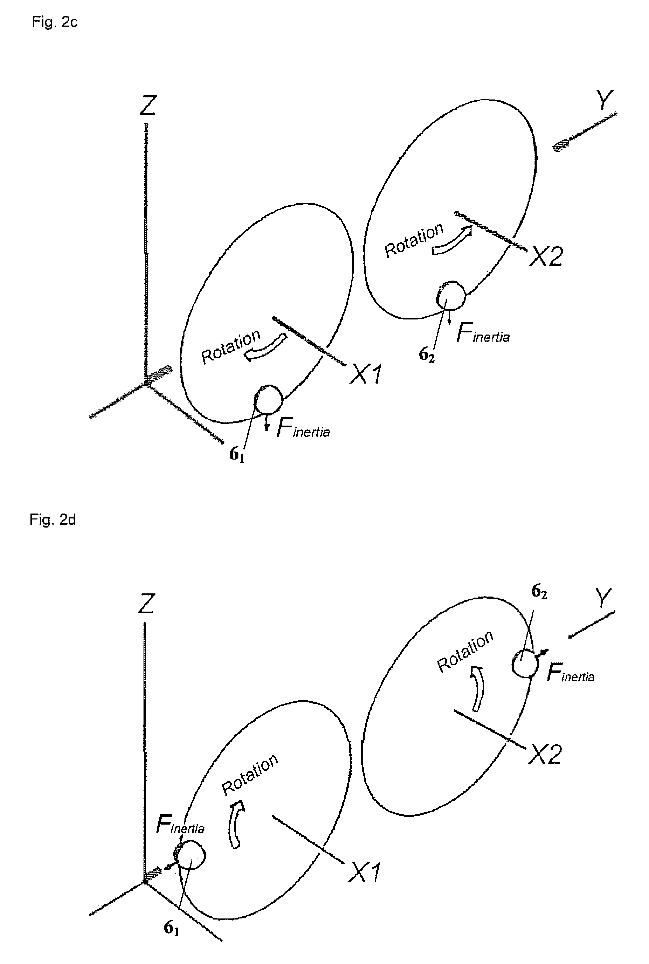

The sum vector of the forces of inertia of such coupled single systems will achieve its positive maximums at the angle $\alpha=0°$ and $360°$ (Fig. 2a) (angle measured with respect to the rotation of the first object $6_1$ around axis X1 and axis X2 for object $6_2$. The negative maximum of the sum force of inertia is achieved at the angle $\alpha=180°$ (Fig. 2c). The sum of the forces of inertia is zero at the angles of rotation equal $\alpha=90°$ and $\alpha=270°$ (Fig. 2b and 2d). The value of the sum of the forces of inertia depends on the angle of rotation at each specific moment in time, but due to the clockwise and anticlockwise motion of the first and second objects $6_1$ and $6_2$, the direction of the sum vector of the forces of inertia is always parallel to axis Z. The value of the resulting force follows a cosine curve, when the movements starts with both objects $6_1$ and $6_2$ being located at the top position. The force has a positive value along the z-direction in the topmost position, is zero at 90°, negative at the bottom position of the two objects $6_1$ and $6_2$ and zero again at 270°.

It is now proposed to additionally rotate the planes of rotation of the two objects $6_1$ and $6_2$ around the axis Y themselves, so that the axis X1 and X2 would rotate around axis Y, thus making the plane of rotation of the objects $6_1$ and $6_2$ and the plane of the forces of inertia rotate around axis Y.

In one preferred embodiment, the rotation has the same frequency as the frequencies $f_1$ and $f_2$ of rotation of objects $6_1$ and $6_2$. Preferably, the rotation also has the same phase. Thus, in a preferred embodiment the angle between the axis X1 and X2 and the axis Z is equal to the angle between the radius of rotation of the objects and the axis Y at any given moment in time. By starting rotation around axis Y of the plane of rotation of the objects itself, the vector of the resulting force of inertia will always lie in the plane XZ and will rotate around axis Y, and the projection of the resulting force of inertia will always have a positive direction with respect to the Z-axis. The zero point of the resulting force will be associated with the angles 90° and 180° of the angle of rotation of the rotating planes of rotation and the maximum resulting force will be achieved at a rotational angle of 0° or 360° degrees. The angle is the angle between plane XY and axis Z, or the angle between the radius of rotation of the object and axis Y as these two angles are equal if the phases of the different rotations match.

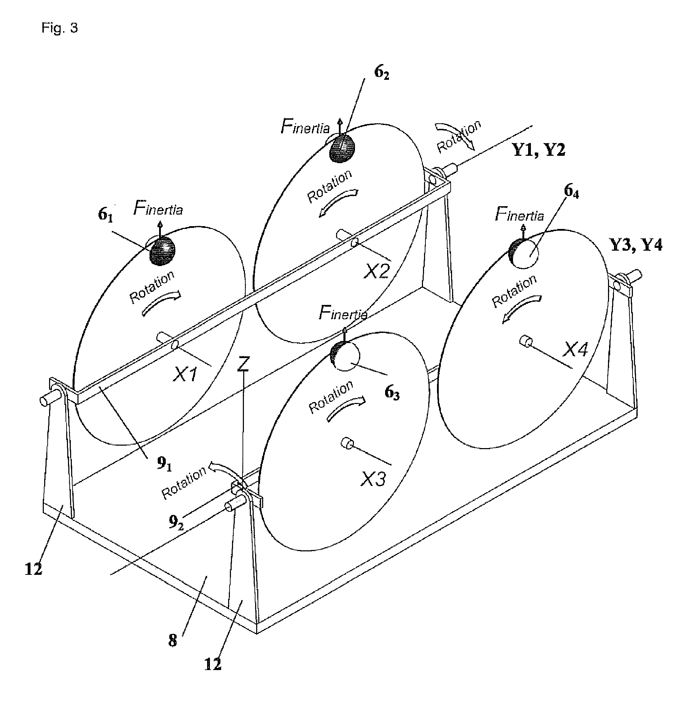

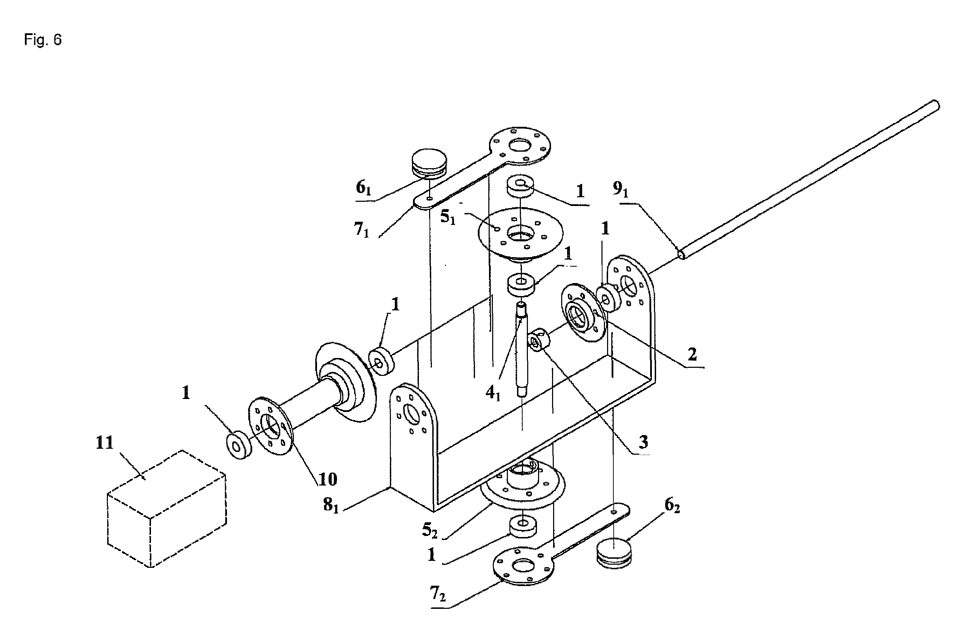

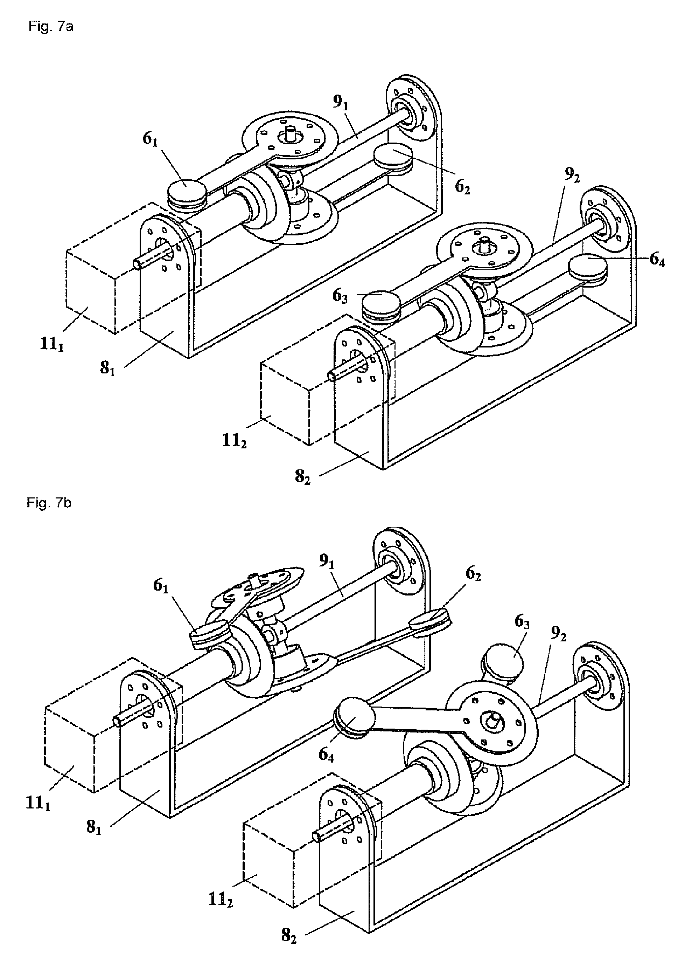

Fig. 3 shows a means for moving objects in three-dimensional space or actuator comprising two of such coupled systems with four rotating objects $6_1$ to $6_4$. A first object $6_1$ rotates around axis X1 clockwise with a first frequency $f_1$. A second object $6_2$ rotates around axis X2 anti-clockwise with a second frequency $f_2$. Both planes of rotation of the first and second object $6_1$ and $6_2$ rotate around an axis Y1 and Y2, respectively, where the axis Y1 and Y2 are identical in the shown embodiment. However, the axis may also be different. Further, a third object $6_3$ rotates around axis X3 clockwise with a third frequency $f_3$. A fourth object $6_4$ rotates around axis X4 anti-clockwise with a fourth frequency $f_4$. Both planes of rotation of the third and fourth object $6_3$ and $6_4$ rotate around an axis Y3 and Y4, respectively, where in Fig. 3 Y3 and Y4 are identical. However, the axis Y3 and Y4 may also not be identical. In Fig. 3, the first object $6_1$ and the second object $6_2$ are connected to a shaft $9_1$. The shaft $9_1$ itself is connected via holders 12 to a common base 8. The third and fourth object $6_3$ and $6_4$ are connected to a second shaft $9_2$, which itself again is connected via holders 12 to the common base 8. As can be seen in Fig. 6 and 7, the objects $6_1$-$6_4$ can be connected to the shafts via rotors 7. The objects $6_1$-$6_4$ preferably have a considerably larger weight than the respective rotors 7. The shafts $9_1$, $9_2$ may be rotated by electric motors (not shown), connected to the shafts $9_1$, $9_2$. The objects $6_1$-$6_4$ may be rotated by the same motors as the shafts $9_1$, $9_2$, via corresponding means for providing a movement, or may be have an independent drive.

In a preferred embodiment as shown in Fig. 3, the axis of rotation X1, X2, X3 and X4 of the four rotating

objects $6_1$-$6_4$ are parallel, and also the axis of rotation Y1=Y2 and Y3=Y4 of the rotation of the planes of rotation are parallel to one another. In this way, an effect is achieved, where the two sum inertia forces of each coupled system can be added as will be explained in the following.

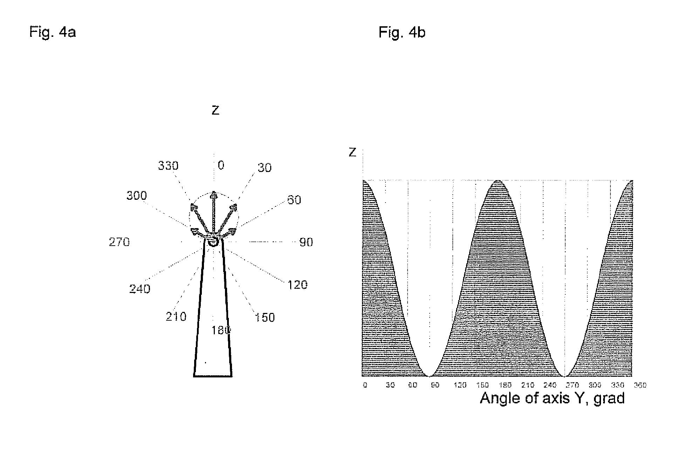

If now the plane X1Y1 and X2Y2 rotate clockwise with a frequency $f_5$ and $f_6$, respectively, and the planes X3Y3 and X4Y4 rotate anticlockwise with a frequency $f_7$ and $f_8$, respectively, and the frequencies of rotation $f_5$-$f_8$ of these planes are equal and the frequency of rotation of the objects $f_1$-$f_4$ is equal to the frequency of rotation of the two planes, i.e. $f_1$=$f_2$=$f_3$=$f_4$=$f_5$=$f_6$=$f_7$=$f_8$, then the resulting vector of the sum force of inertia will always be directed parallel to axis Z and the components of the forces of inertia and other directions cancel each other. The direction and value of the resulting force will always be positive or zero at the angles 90-180°. This is shown in Fig. 4. The left diagram Fig. 4a is a vector diagram of the resulting force of inertia, the right diagram Fig. 4b is its projection on the z-axis. The value of the resulting force is never negative, thus the actuator of Fig. 3 would move upwards.

By means of using a plurality of coupled or virtually coupled systems, an effect can be achieved, whereby changing the angles between the local axis Z1, Z2 and other angles the sum force of all forces of inertia may change its angle with respect to the vertical axis Z.

All these coupled systems provided with the motors, shafts, bases, objects, hands etc. create a reserved body, where the resulting sum of all the forces of inertia act upon the main shaft(s) (axis Y) and by means of the main shaft(s) connected to the body, the complete mechanism feels the influence of this force and, depending on the direction and number of the force, may move or experience stress in the direction of the force.

A second embodiment of the above mentioned invention is shown in a sample machine of Figs. 6 and 7a, 7b described below. It should be noted that for illustrative purposes, Fig. 6 shows only one half of the machine of Fig. 7a, 7b.

A first main shaft $9_1$ is positioned on a first base $8_1$ by means of bearings 1 fixed in a ring 2 and a fixed cone cogged wheel 10. The first supplementary shaft $4_1$ is fixed to the first main shaft $9_1$ via a ring 3. The rotating cone cogged wheels $5_1$ and $5_2$ and hands or rotors $7_1$, $7_2$ are fixed to the first supplementary shaft $4_1$ by means of bearings 1. The first and second objects $6_1$ and $6_2$ are fixed to the rotors $7_1$, $7_2$, respectively. The moving cone cogged wheels 5 get into connection with the fixed non-rotating cone cogged wheel 10, thus creating a gear box with the ratio equal to 1.0, meaning that the number of cogs is equal on every wheel involved in the connection. The rotors 7 and objects 6 are positioned in opposite locations along the axis Y, i.e. the angle between the rotors is 180°. Please note that in Fig. 6 and 7 the objects are arranged on opposite sides of the first main shaft $9_1$, spaced apart from each other perpendicularly to the axis of the first main shaft $9_1$, whereas in Fig. 3 the objects $6_1$ and $6_2$ are spaced apart along the axis of the first main shaft $9_1$ such that their planes of rotation do not overlap. A motor 11 is connected to the first main shaft $9_1$ via bearings 1.

The motor 11 generates a rotating moment, which is transferred to the main shaft $9_1$. The shaft $9_1$ starts rotating around its own axis (axis Y), and starts rotation of the first supplementary shaft $4_1$. The rotating wheels 5, driven by the first supplementary shaft $4_1$ and being in connection with the fixed wheel 10, start rotation around their axis (axis X), and at the same time rotate around the axis of the first main shaft $9_1$ (axis Y). Thus, the hands or rotors 7 and objects 6 are rotated. The rotors 7 and objects 6 are fixed to the rotating wheels 5. The rotating objects 6 generate forces of inertia, and rotation around the axis Y makes the projection of the sum force of all inertia forces to be always positive in relation to axis Z. The sum force is applied to the whole mechanism and moves the complete mechanism or means in the z-direction.

By means of using two or more of these coupled systems as shown in Fig. 7 for two coupled systems at two different points of rotation, within the above-mentioned mechanism, a desired direction of the sum force of the forces of inertia of all objects $6_1$-$6_4$ can be achieved.

It is pointed out that the above embodiments have been described while referring to specific alignments of frequencies of rotation, phases and axis of rotation. This has been done for simplification only. With the above-presented arrangement, the resulting force can be aligned with the z-axis. However, it is important to notice that

- the masses of the objects $6_1$-$6_4$ can be different and varied;

- the radii of rotation of the masses can be different and varied;

- the frequencies of rotation of the objects $f_1$-$f_4$ can be different and varied;

- the frequencies of rotation $f_5$-$f_8$ of the planes of rotation of the objects $6_1$-$6_4$ can be different and varied;

- all directions of the rotational axis X1-X4 and Y1-Y4 can be non-parallel and can be varied.

Changing the mutual angles between the axis of rotations of all the objects, the skilled person will vary the direction of the resulting force, and by means of changing the mass of the objects, radiuses of rotation or by changing the frequency of rotation, the skilled person can achieve any needed value of the resulting force and the projection of the sum force on the axis of the expected direction.

That means, in general the inventive method of producing a residual force in a system of rotating objects generates a desired net residual force by adjusting at least one element of the group consisting of:

(a) the frequency of rotation of the objects $6_1$-$6_4$;

(b) the frequency of rotation of the planes of rotation of the objects $6_1$-$6_4$;

(c) the direction of the axis of rotations of the objects $6_1$-$6_4$;

(d) the direction of the axis of the planes of rotation of the objects $6_1$-$6_4$;

(e) the weight of the objects $6_1$-$6_4$;

(f) the phases of rotation of the objects $6_1$-$6_4$;

(g) the radii of rotation of the objects $6_1$-$6_4$.

The net residual force is maximized if all frequencies of rotation $f_1$-$f_8$ are the same, and the first to fourth axis of rotation X1-X4 are parallel to each other and the fifth to eight axis Y1-Y4 are parallel to each other, and the objects $6_1$-$6_4$ and their weights are identical, and the phase differences between the first and third object $6_1$, $6_3$ are zero and the phase difference between the second and fourth object $6_2$, $6_4$ are zero, preferably all phases of rotation are the same, and the locations of the zero-crossing points of motion are identical for all four objects $6_1$-$6_4$ and their planes of rotation, and the radii of rotation of the objects $6_1$-$6_4$ are identical.

It is pointed out that the actuator of the present invention can of course also be used as a vibrator by misaligning the objects, masses, and radii of rotation or axis of rotation.

**List of reference signs**

| | |
|---|---|
| 1 | bearing |
| 2 | support |
| 3 | ring |
| 4 | supplementary shaft |
| 5 | cone-cogged wheel (rotor) |
| $6_1$ | first object |
| $6_2$ | second object |
| $6_3$ | third object |
| $6_4$ | fourth object |
| 7 | hand or rotor |
| 8 | base |
| $8_1$ | first base |
| $8_2$ | second base |
| 9 | main shaft |
| $9_1$ | first drive shaft |
| $9_2$ | second drive shaft |
| 10 | cone-cogged wheel (stator) |
| 11 | engine |
| 12 | holder |
| X1-X4 | axis of rotation of the respective objects |
| Y1-Y4 | axis of rotation of the planes of rotation of the respective objects |

**Claims**

1. An actuator, comprising:

a first object ($6_1$) rotating clockwise with a first rotational frequency ($f_1$) around a first axis (X1);
a second object ($6_2$) rotating anticlockwise with a second rotational frequency ($f_2$) around a second axis (X2);
a third object ($6_3$) rotating clockwise with a third rotational frequency ($f_3$) around a third axis (X3);
a fourth object ($6_4$) rotating anticlockwise with a fourth rotational frequency ($f_4$) around a fourth axis (X4),
wherein
the plane of rotation of the first object ($6_1$) itself rotates around a fifth axis (Y1) with a fifth rotational frequency ($f_5$),
the plane of rotation of the second object ($6_2$) itself rotates around a sixth axis (Y2) with a sixth rotational frequency ($f_6$),
the plane of rotation of the third object ($6_3$) itself rotates around a seventh axis (Y3) with a seventh rotational frequency ($f_7$),
the plane of rotation of the fourth object ($6_4$) itself rotates around an eight axis (Y4) with a eight rotational frequency ($f_8$).

2. The actuator of claim 1, wherein the planes of rotation of the first object ($6_1$) and the second object ($6_2$) rotate clockwise and the planes of rotation of the third object ($6_3$) and the fourth object ($6_4$) rotate anticlockwise.

3. The actuator of claim 1 or 2, wherein the first object ($6_1$) and the second object ($6_2$) rotate around their respective axis (X1, X2) with the same frequency $f_1$=$f_2$, and/or wherein the third object ($6_3$) and the fourth object ($6_4$) rotate around their respective axis (X2, X4) with the same frequency $f_3$=$f_4$.

4. The actuator of one of the previous claims, wherein the planes of rotation of the first object ($6_1$) and the second object ($6_2$) rotate with the same frequency $f_5$=$f_6$.

5. The actuator of one of the previous claims, wherein the planes of rotation of the third object ($6_3$) and the fourth object ($6_4$) rotate with the same frequency $f_7$=$f_8$.

6. The actuator of one of the previous claims, wherein the first axis (X1) and the second axis (X2) are arranged parallel to one another, and/or wherein the third axis (X3) and the fourth axis (X4) are arranged parallel to one another.

7. The actuator of one of the previous claims, wherein the phase of rotation the first object ($6_1$) and the phase of rotation of the second object ($6_2$) is the same, and/or wherein the phase of rotation the third object ($6_3$) and the phase of rotation of the fourth object ($6_4$) is the same.

8. The actuator of one of the previous claims, wherein the first to eight frequency of rotation ($f_1$-$f_8$) all have the same value, the first to fourth axis (X1-X4) are parallel to each other and the fifth to eight axis (Y1-Y4) are parallel to each other, and the first to fourth (X1-X4) axis are perpendicular to the fifth to eight axis (Y1-Y4).

9. The actuator of one of the previous claims, wherein the first object ($6_1$) and the second object ($6_2$) are coupled to a first shaft ($9_1$), wherein the first shaft rotates around an axis such that the fifth rotational frequency ($f_5$) and the sixth rotational frequency ($f_6$) are equal and have the value of the rotational frequency of the first shaft ($9_1$) and the fifth axis (Y1) and sixth axis (Y2) are aligned with each other, and the third object ($6_3$) and the fourth object ($6_4$) are coupled to a second shaft ($9_2$), wherein the second shaft rotates around an axis such that the seventh rotational frequency ($f_7$) and the eight rotational frequency ($f_8$) are equal and have the value of the rotational frequency of the second shaft ($9_2$) and the seventh axis (Y3) and eight axis (Y4) are aligned with each other.

10. The actuator of claim 9, wherein the first and second shaft ($9_1$, $9_2$) are arranged parallel to each other.

11. The actuator of one of the claims 9 or 10, wherein each of the first to fourth objects ($6_1$-$6_4$) are connected to their respective shafts ($9_1$, $9_2$) via a rotor ($7_1$-$7_4$), respectively.

12. The actuator of claim 11, wherein the rotors ($7_1$, $7_2$) of the first and second object ($6_1$, $6_2$) and/or the rotors ($7_3$, $7_4$) of the third and fourth object ($6_3$, $6_4$):

   are provided longitudinally spaced apart on the first shaft ($8_1$) or the second shaft ($8_2$), respectively, or
   are arranged on two opposite sides of the first shaft ($8_1$) or second shaft ($8_2$), respectively, fixed to the same point of the first shaft ($8_1$) or second shaft ($8_2$), respectively.

13. The actuator of one of the claims 11 or 12, wherein the rotors ($7_1$-$7_4$) are connected to the respective shafts ($9_1$, $9_2$) via gear wheels or cogged wheels (10).

14. The actuator of one of the claims 9 to 13, wherein the first shaft ($9_1$) is attached to a first base ($8_1$) and the second shaft ($9_2$) is attached to a second base ($8_2$) or both are attached to the same base (8).

15. The actuator of one of the previous claims, wherein at least one motor (11) is provided to rotate the objects ($6_1$-$6_4$) and planes of rotation.

16. The system of one of the previous claims, wherein the first to fourth object ($6_1$-$6_4$) are identical and/or their radii of rotations are the same.

17. Method of producing a residual force in a system of rotating objects:

   rotating a first object ($6_1$) clockwise with a first rotational frequency ($f_1$) around a first axis (X1);
   rotating a second object ($6_2$) anticlockwise with a second rotational frequency ($f_2$) around a second axis (X2);
   rotating a third object ($6_3$) clockwise with a third rotational frequency ($f_3$) around a third axis (X3);
   rotating a fourth object ($6_4$) anticlockwise with a fourth rotational frequency ($f_4$) around a fourth axis (X4),
   rotating the plane of rotation of the first object ($6_1$) itself around a fifth axis (Y1) with a fifth rotational frequency ($f_5$),
   rotating the plane of rotation of the second object ($6_2$) itself around a sixth axis (Y2) with a sixth rotational frequency ($f_6$),
   rotating the plane of rotation of the third object ($6_3$) itself around a seventh axis (Y3) with a seventh rotational frequency ($f_7$),
   rotating the plane of rotation of the fourth object ($6_4$) itself around an eight axis (Y4) with a eight rotational frequency ($f_8$),
   producing a net residual force by adjusting at least one element of the group consisting of:

      (h) the frequency of rotation of the objects ($6_1$-$6_4$);
      (i) the frequency of rotation of the planes of rotation of the objects ($6_1$-$6_4$);
      (j) the direction of the axis of rotations of the objects ($6_1$-$6_4$);
      (k) the direction of the axis of the planes of rotation of the objects ($6_1$-$6_4$);
      (l) the weight of the objects ($6_1$-$6_4$);
      (m) the phases of rotation of the objects ($6_1$-$6_4$);
      (n) the radii of rotation of the objects ($6_1$-$6_4$).

**18.** Method of claim 17, wherein the net residual force is maximized if:

all frequencies of rotation ($f_1$-$f_8$) are the same, and
the first to fourth axis of rotation (X1-X4) are parallel to each other and the fifth to eight axis (Y1-Y4) are parallel to each other, and
the objects ($6_1$-$6_4$) are identical, and
the phase differences between the first and third object ($6_1$, $6_3$) is zero and the phase difference between the second and fourth object ($6_2$, $6_4$) is zero and the locations of the zero-crossing points of motion are identical for all four objects ($6_1$-$6_4$) and their planes of rotation, and
the radii of rotation of the objects ($6_1$-$6_4$) are identical.

Fig. 1

Fig. 2a

Fig. 2b

Fig. 2c

Fig. 2d

Fig. 3

Fig. 4a

Fig. 4b

Z

330   0   30
300          60
270          90
240         120
210        150
180

Z

0   30   60   90   120   150   180   210   240   270   300   330   360
Angle of axis Y, grad

Fig. 5

Fig. 6

Fig. 7a

Fig. 7b

Europäisches
Patentamt

European
Patent Office

Office européen
des brevets

**EUROPEAN SEARCH REPORT**

Application Number

EP 09 17 6316

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/077425 A1 (PAYETTE RAYMOND [CA]) 14 April 2005 (2005-04-14) * figures 5,6,12,16,19 * * paragraphs [0079], [0080] * * abstract * ----- | 1-18 | INV. F03G3/06 |
| X | FR 2 900 204 A1 (BENHERREF AHMED [FR]) 26 October 2007 (2007-10-26) * abstract * * figures 5,6 * ----- | 1-18 | |
| X | WO 91/02155 A1 (DELROY MORTIMER S [CA]) 21 February 1991 (1991-02-21) * abstract * * figures 1,2,7 * ----- | 1-18 | |

TECHNICAL FIELDS
SEARCHED    (IPC)

F03G

The present search report has been drawn up for all claims

| Place of search | Date of completion of the search | Examiner |
|---|---|---|
| Munich | 11 May 2010 | Giorgini, Gabriele |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

## ANNEX TO THE EUROPEAN SEARCH REPORT
## ON EUROPEAN PATENT APPLICATION NO.

EP 09 17 6316

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2010

| Patent document cited in search report | | Publication date | Patent family member(s) | | Publication date |
|---|---|---|---|---|---|
| US 2005077425 | A1 | 14-04-2005 | WO 2005035363 | A1 | 21-04-2005 |
| FR 2900204 | A1 | 26-10-2007 | NONE | | |
| WO 9102155 | A1 | 21-02-1991 | AU 6065690 | A | 11-03-1991 |
| | | | CA 1335239 | C | 18-04-1995 |
| | | | EP 0486537 | A1 | 27-05-1992 |
| | | | JP 4507276 | T | 17-12-1992 |
| | | | US 5090260 | A | 25-02-1992 |

EPO FORM P0459

For more details about this annex : see Official Journal of the European Patent Office, No. 12/82